(19) Europäisches Patentamt / European Patent Office / Office européen des brevets

(11) **EP 4 084 116 A1**

(12) **EUROPEAN PATENT APPLICATION**
published in accordance with Art. 153(4) EPC

(43) Date of publication:
**02.11.2022 Bulletin 2022/44**

(21) Application number: **20904961.8**

(22) Date of filing: **23.12.2020**

(51) International Patent Classification (IPC):
$H01M\ 4/13$ (2010.01)   $H01M\ 4/131$ (2010.01)
$H01M\ 4/505$ (2010.01)   $H01M\ 4/525$ (2010.01)
$H01M\ 4/62$ (2006.01)   $H01M\ 4/66$ (2006.01)

(52) Cooperative Patent Classification (CPC):
H01M 4/13; H01M 4/131; H01M 4/505;
H01M 4/525; H01M 4/62; H01M 4/66; Y02E 60/10

(86) International application number:
**PCT/JP2020/048306**

(87) International publication number:
**WO 2021/132405 (01.07.2021 Gazette 2021/26)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **27.12.2019 JP 2019239693**

(71) Applicant: **Panasonic Intellectual Property
Management Co., Ltd.
Osaka-shi, Osaka 540-6207 (JP)**

(72) Inventors:
• **OSHIMA, Tatsuya**
  **Osaka 540-6207 (JP)**
• **SUGIMOTO, Yuta**
  **Osaka 540-6207 (JP)**
• **NAGAO, Kenji**
  **Osaka 540-6207 (JP)**
• **SASAKI, Izuru**
  **Osaka 540-6207 (JP)**
• **MIYAZAKI, Akinobu**
  **Osaka 540-6207 (JP)**

(74) Representative: **Eisenführ Speiser
Patentanwälte Rechtsanwälte PartGmbB
Postfach 10 60 78
28060 Bremen (DE)**

(54) **ELECTRODE AND BATTERY**

(57)    An electrode 1000 of the present disclosure includes an electrode mixture layer 110 and an electrode current collector layer 100. The electrode current collector layer 100 is in contact with the electrode mixture layer 110. The electrode mixture layer 110 includes a solid electrolyte material 111 and an active material 112. The solid electrolyte material 111 includes Li, M, and X. M is at least one selected from the group consisting of metal elements other than Li and metalloid elements. X is at least one selected from the group consisting of F, CI, Br, and I. The electrode current collector layer 100 has a surface material in contact with the electrode mixture layer 110, and a copper content in the surface material is less than 50 mass%.

FIG. 1

**Description**

TECHNICAL FIELD

The present disclosure relates to an electrode and a battery.

BACKGROUND ART

Patent Literature 1 discloses a positive electrode including: a halide solid electrolyte; a positive electrode active material; and a positive electrode current collector, as well as a battery. As the positive electrode current collector, an aluminum powder is used.

CITATION LIST

Patent Literature

Patent Literature 1: WO 2019/146217

SUMMARY OF INVENTION

Technical Problem

The present disclosure provides an electrode that improves the cycle characteristics of a battery.

Solution to Problem

An electrode according to one aspect of the present disclosure is an electrode including:

an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,
the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and a copper content in the surface material is less than 50 mass%.

Advantageous Effects of Invention

The present disclosure provides an electrode that improves the cycle characteristics of a battery.

BRIEF DESCRIPTION OF DRAWINGS

FIG. 1 shows a cross-sectional view of an electrode 1000 according to Embodiment 1.
FIG. 2 shows a cross-sectional view of a battery 2000 according to Embodiment 2.

DESCRIPTION OF EMBODIMENTS

An electrode according to a first aspect of the present disclosure is an electrode including:

an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,

the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and a copper content in the surface material is less than 50 mass%.

When used in a battery, the electrode according to the first aspect can improve the cycle characteristics of the battery.

In a second aspect of the present disclosure, for example, in the electrode according to the first aspect, the copper content in the surface material may be 4.5 mass% or less.

When used in a battery, the electrode according to the second aspect can further improve the cycle characteristics of the battery.

In a third aspect of the present disclosure, for example, in the electrode according to the first or second aspect, the solid electrolyte material may be represented by the following composition formula (1)

$$Li_\alpha M_\beta X_\gamma \ldots \qquad \text{Formula (1)},$$

where $\alpha$, $\beta$, and $\gamma$ are each a value greater than 0.

According to the electrode according to the third aspect, the ionic conductivity of the solid electrolyte material improves, and thus the ionic conductivity of the electrode can improve. Accordingly, when used in a battery, the electrode according to the third aspect can further improve the cycle characteristics of the battery.

In a fourth aspect of the present disclosure, for example, in the electrode according to any one of the first to third aspects, the M may include yttrium.

When used in a battery, the electrode according to the fourth aspect can further improve the cycle characteristics of the battery.

In a fifth aspect of the present disclosure, for example, in the electrode according to any one of the first to fourth aspects, the electrode current collector layer may include aluminum as a main component.

In a sixth aspect of the present disclosure, for example, in the electrode according to the fifth aspect, the electrode current collector layer may further includes an element other than aluminum.

In a seventh aspect of the present disclosure, for example, in the electrode according to any one of the first to sixth aspects, the electrode current collector layer may include an aluminum alloy.

Aluminum and aluminum alloys are lightweight metals having a high electrical conductivity. Accordingly, when used in a battery, the electrodes according to the fifth to seventh aspects not only can improve the cycle characteristics of the battery but also can improve the weight energy density of the battery.

In an eighth aspect of the present disclosure, for example, in the electrode according to any one of the first to seventh aspects, the active material may be a lithium-containing transition metal oxide.

When used in a battery, the electrode according to the eighth aspect not only can improve the cycle characteristics of the battery but also can reduce the manufacturing costs of the electrode and the battery and can increase the average discharge voltage of the battery.

In a ninth aspect of the present disclosure, for example, in the electrode according to the eighth aspect, the active material may be lithium nickel cobalt manganese oxide.

When used in a battery, the electrode according to the ninth aspect not only can improve the cycle characteristics of the battery but also can increase the energy density of the battery.

A battery according to a tenth aspect of the present disclosure is a battery including:

a positive electrode;
a negative electrode; and
an electrolyte layer disposed between the positive electrode and the negative electrode, wherein
at least one selected from the group consisting of the positive electrode and the negative electrode is the electrode according to one of the first to ninth aspects.

According to the battery according to the tenth aspect, excellent cycle characteristics can be achieved.

In an eleventh aspect of the present disclosure, for example, in the battery according to the tenth aspect, the positive electrode may be the electrode according to one of the first to ninth aspects.

According to the battery according to the eleventh aspect, further excellent cycle characteristics can be achieved.

Hereinafter, embodiments of the present disclosure will be described with reference to the drawings.

(Embodiment 1)

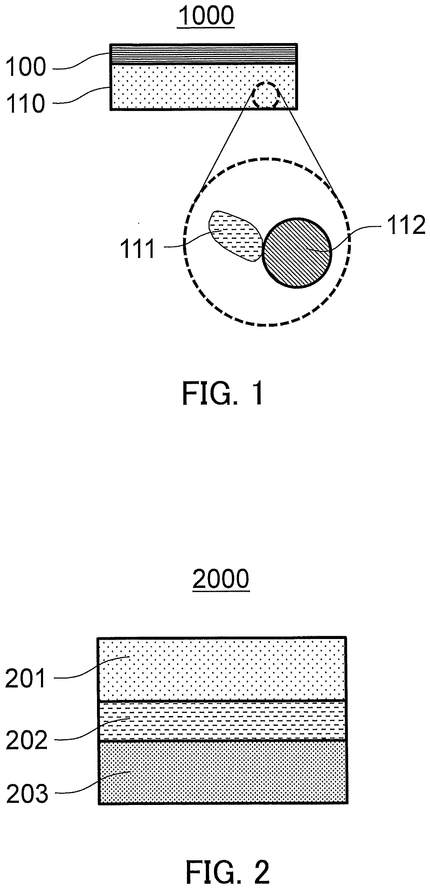

FIG. 1 is a cross-sectional view of an electrode 1000 according to Embodiment 1. The electrode 1000 according to Embodiment 1 includes an electrode current collector layer 100 and an electrode mixture layer 110. The electrode current collector layer 100 is in contact with the electrode mixture layer 110. The electrode mixture layer 110 includes a solid electrolyte material 111 and an active material 112. The solid electrolyte material 111 includes Li, M, and X, where M is at least one selected from the group consisting of metal elements other than Li and metalloid elements, and X is at least one selected from the group consisting of F, Cl, Br, and I. The electrode current collector layer 100 has a surface material in contact with the electrode mixture layer 110, and the copper content in the surface material is less than 50 mass%.

With the structure above, when used in a battery (e.g., an all-solid-state secondary battery), the electrode 1000 according to Embodiment 1 can improve the cycle characteristics of the battery.

In the electrode current collector layer 100 according to Embodiment 1, the copper content in the surface material may be 4.5 mass% or less.

With the structure above, when used in a battery, the electrode 1000 according to Embodiment 1 can further improve the cycle characteristics of the battery.

In the electrode current collector layer 100, the surface material in contact with the electrode mixture layer 110 refers to a material of a contact portion of a surface of the electrode current collector layer 100, in contact with the electrode mixture layer 110, from the surface to a depth of 50 nm. The copper content in the surface material is the proportion of the mass of copper contained in the surface material with respect to the total mass of the surface material. The copper content in the surface material can be determined by, for example, scanning electron microscope-energy dispersive X-ray spectroscopy (SEM-EDX). In the case where measurement by SEM-EDX is difficult, X-ray photoelectron spectroscopy (XPS) may be used for determining the copper content in the surface material, for example.

In the present disclosure, the term "metalloid elements" are B, Si, Ge, As, Sb, and Te.

Furthermore, in the present disclosure, the term "metal elements" are:

(i) all the elements included in Groups 1 to 12 of the periodic table, except for hydrogen; and
(ii) all the elements included in Groups 13 to 16 of the periodic table, except for B, Si, Ge, As, Sb, Te, C, N, P, O, S, and Se.

In other words, in the present disclosure, the terms "metalloid elements" and "metal elements" are a group of elements that can become cations when forming an inorganic compound with a halogen element.

The electrode 1000 according to Embodiment 1 will be described in detail below. The solid electrolyte material 111 may be a halide solid electrolyte material. Note that, in the present disclosure, the term "halide solid electrolyte material" means a solid electrolyte material containing a halogen element and being free of sulfur. Furthermore, in the present disclosure, a sulfur-free solid electrolyte material means a solid electrolyte material represented by a composition formula including no sulfur element. Accordingly, a solid electrolyte material containing an extremely minute amount of a sulfur component, for example, 0.1 mass% or less of sulfur, is included in sulfur-free solid electrolyte materials. The halide solid electrolyte material may further contain oxygen as an anion other than a halogen element. The following describes an example where the solid electrolyte material 111 is a halide solid electrolyte material containing Li, M, and X. Thus, the solid electrolyte material 111 is referred to also as a halide solid electrolyte material 111.

[Electrode Mixture Layer]

The electrode mixture layer 110 according to Embodiment 1 includes the halide solid electrolyte material 111 and the active material 112. The following describes in detail the halide solid electrolyte material 111, the active material 112, and the electrode mixture layer 110.

<Halide Solid Electrolyte Material>

As described above, the halide solid electrolyte material 111 is a material containing Li, M, and X. The element M and the element X are as described above. With the structure above, the ionic conductivity of the halide solid electrolyte material 111 further improves, and thus the ionic conductivity of the electrode according to Embodiment 1 can further improve. Accordingly, when used in a battery, the electrode according to Embodiment 1 can improve the cycle characteristics of the battery. Furthermore, when used in a battery, the electrode according to Embodiment 1 can improve the thermal stability of the battery. Moreover, since the halide solid electrolyte material 111 is free of sulfur, the electrode according to Embodiment 1 can suppress generation of hydrogen sulfide gas.

For example, the halide solid electrolyte material 111 may be a material represented by the following composition

formula (1).

$$Li_\alpha M_\beta X_\gamma ... \qquad \text{Formula (1)}$$

Here, in the composition formula (1) above, $\alpha$, $\beta$, and $\gamma$ are each a value greater than 0, and $\gamma$ can be, for example, 4 or 6.

With the structure above, the ionic conductivity of the halide solid electrolyte material 111 improves, and thus the ionic conductivity of the electrode according to Embodiment 1 can improve. Accordingly, when used in a battery, the electrode 1000 according to Embodiment 1 can further improve the cycle characteristics of the battery.

In the composition formula (1) above, the element M may include Y (= yttrium). In other words, the halide solid electrolyte material 111 may contain Y as a metal element.

The halide solid electrolyte material 111 containing Y may be represented, for example, by the following composition formula (2).

$$Li_a Me_b Y_c X_6 ... \qquad \text{Formula (2)}$$

Here, a, b, and c may satisfy a + mb + 3c = 6 and c > 0. The element Me is at least one selected from the group consisting of metal elements other than Li and Y and metalloid elements. The symbol m represents the valence of the element Me. Additionally, in the case where the element Me includes a plurality of types of elements, mb represents the total of values each obtained by multiplying the composition ratio of each of the elements by the valence of the element. Assume a case where, for example, Me includes an element Me1 and an element Me2, the composition ratio of the element Me1 is represented by $b_1$, the valence of the element Me1 is represented by $m_1$, the composition ratio of the element Me2 is represented by $b_2$, and the valence of the element Me2 is represented by $m_2$. In this case, mb = $m_1 b_1$ + $m_2 b_2$ holds. In the composition formula (2) above, the element X is at least one selected from the group consisting of F, Cl, Br, and I.

The element Me may be, for example, at least one selected from the group consisting of Mg, Ca, Sr, Ba, Zn, Sc, Al, Ga, Bi, Zr, Hf, Ti, Sn, Ta, Gd, and Nb.

The following materials, for example, can be used as the halide solid electrolyte material 111. With the following materials, the ionic conductivity of the halide solid electrolyte material 111 further improves, and thus the ionic conductivity of the electrode 1000 according to Embodiment 1 can further improve. Accordingly, when used in a battery, the electrode 1000 according to Embodiment 1 can further improve the cycle characteristics of the battery.

The halide solid electrolyte material 111 may be a material represented by the following composition formula (A1).

$$Li_{6-3d} Y_d X_6 ... \qquad \text{Formula (A1)}$$

Here, in the composition formula (A1), the element X is at least one selected from the group consisting of Cl, Br, and I. Furthermore, in the composition formula (A1), d satisfies 0 < d < 2.

The halide solid electrolyte material 111 may be a material represented by the following composition formula (A2).

$$Li_3 Y X_6 ... \qquad \text{Formula (A2)}$$

Here, in the composition formula (A2), the element X is at least one selected from the group consisting of Cl, Br, and I.

The halide solid electrolyte material 111 may be a material represented by the following composition formula (A3).

$$Li_{3-3\delta} Y_{1+\delta} Cl_6 ... \qquad \text{Formula (A3)}$$

Here, in the composition formula (A3), $\delta$ satisfies $0 < \delta \leq 0.15$.

The halide solid electrolyte material 111 may be a material represented by the following composition formula (A4).

$$Li_{3-3\delta} Y_{1+\delta} Br_6 ... \qquad \text{Formula (A4)}$$

Here, in the composition formula (A4), $\delta$ satisfies $0 < \delta \leq 0.25$.

The halide solid electrolyte material 111 may be a material represented by the following composition formula

(A5).

$$Li_{3-3\delta+a}Y_{1+\delta-a}Me_aCl_{6-x-y}Br_xI_y \dots \quad \text{Formula (A5)}$$

Here, in the composition formula (A5), the element Me is at least one selected from the group consisting of Mg, Ca, Sr, Ba, and Zn.
Furthermore, the composition formula (A5) above satisfies:

$$-1 < \delta < 2;$$

$$0 < a < 3;$$

$$0 < (3 - 3\delta + a);$$

$$0 < (1 + \delta - a);$$

$$0 \leq x \leq 6;$$

$$0 \leq y \leq 6;$$

and

$$(x + y) \leq 6.$$

The halide solid electrolyte material 111 may be a material represented by the following composition formula (A6).

$$Li_{3-3\delta}Y_{1+\delta-a}Me_aCl_{6-x-y}Br_xI_y \dots \quad \text{Formula (A6)}$$

Here, in the composition formula (A6) above, the element Me is at least one selected from the group consisting of Al, Sc, Ga, and Bi.
Furthermore, the composition formula (A6) above satisfies:

$$-1 < \delta < 1;$$

$$0 < a < 2;$$

$$0 < (1 + \delta - a);$$

$$0 \leq x \leq 6;$$

$$0 \leq y \leq 6;$$

and

$$(x + y) \leq 6.$$

The halide solid electrolyte material 111 may be a material represented by the following composition formula (A7).

$$Li_{3-3\delta-a}Y_{1+\delta-a}Me_aCl_{6-x-y}Br_xI_y \ldots \qquad \text{Formula (A7)}$$

Here, in the composition formula (A7) above, the element Me is at least one selected from the group consisting of Zr, Hf, and Ti.

Furthermore, the composition formula (A7) above satisfies:

$$-1 < \delta < 1;$$

$$0 < a < 1.5;$$

$$0 < (3 - 3\delta - a);$$

$$0 < (1 + \delta - a);$$

$$0 \leq x \leq 6;$$

$$0 \leq y \leq 6;$$

and

$$(x + y) \leq 6.$$

The halide solid electrolyte material 111 may be a material represented by the following composition formula (A8).

$$Li_{3-3\delta-2a}Y_{1+\delta-a}Me_aCl_{6-x-y}Br_xI_y \ldots \qquad \text{Formula (A8)}$$

Here, in the composition formula (A8) above, the element Me is at least one selected from the group consisting of Ta and Nb.

Furthermore, the composition formula (A8) above satisfies:

$$-1 < \delta < 1;$$

$$0 < a < 1.2;$$

$$0 < (3 - 3\delta - 2a);$$

$$0 < (1 + \delta - a);$$

$$0 \leq x \leq 6;$$

$$0 \le y \le 6;$$

and

$$(x + y) \le 6.$$

More specific examples which can be used as the halide solid electrolyte material 111 include $Li_3YX_6$, $Li_2MgX_4$, $Li_2FeX_4$, $Li(Al, Ga, In)X_4$, and $Li_3(Al, Ga, In)X_6$. Here, in these materials, the element X is at least one selected from the group consisting of F, Cl, Br, and I. Note that, in the present disclosure, when an element in a formula is expressed such as "(Al, Ga, In)", this expression indicates at least one element selected form the group of elements in parentheses. In other words, the expression "(Al, Ga, In)" is synonymous with the expression "at least one selected from the group consisting of Al, Ga, and In". The same applies to other elements.

Furthermore, the shape of the halide solid electrolyte material 111 is not particularly limited, and may be, for example, acicular, spherical, or ellipsoidal. The shape of the halide solid electrolyte material 111 may be, for example, particulate.

Next, a method of manufacturing the halide solid electrolyte material 111 will be described. Here, a method of manufacturing the halide solid electrolyte material represented by the composition formula (1) above will be exemplified.

First, depending on an intended composition, a plurality of types of binary halide raw material powders are prepared, for example. Binary halides refer to compounds consisting of two types of elements including a halogen element. For example, to produce $Li_3YCl_6$, a raw material powder LiCl and a raw material powder $YCl_3$ are prepared at a molar ratio of 3: 1. At this time, the element types of "M" and "X" in the composition formula (1) can be determined by selecting the types of the raw material powders. Furthermore, the values of "$\alpha$", "$\beta$", and "$\gamma$" in the composition formula (1) can be adjusted by adjusting the types of the raw material powders, the blending ratio of the raw material powders, and the synthesis process.

The raw material powders are mixed and pulverized, and then reacted together by a mechanochemical milling method. Alternatively, the raw material powders may be mixed and pulverized, and then sintered in a vacuum or in an inert atmosphere. The firing condition may be, for example, firing in a range of 100°C to 550°C for 1 hour or more. By these methods, a halide solid electrolyte material represented by the composition formula (1) above can be obtained.

Additionally, the structure of the crystal phase (i.e., crystal structure) of the halide solid electrolyte material can be adjusted or determined in accordance with the reaction method and reaction conditions of the raw material powders.

<Active Material>

The active material 112 according to Embodiment 1 is a positive electrode active material or a negative electrode active material.

The positive electrode active material is, for example, a material having properties of occluding and releasing metal ions (e.g., lithium ions). Examples of the positive electrode active material include a lithium-containing transition metal oxide, a transition metal fluoride, a polyanion material, a fluorinated polyanion material, a transition metal sulfide, a transition metal oxysulfide, and a transition metal oxynitride. Examples of the lithium-containing transition metal oxide include $Li(Ni, Co, Al)O_2$, $Li(Ni, Co, Mn)O_2$, and $LiCoO_2$. In the case where a lithium-containing transition metal oxide is, for example, used as the positive electrode active material, it is possible to reduce the manufacturing costs of the electrode 1000 and the battery, and to increase the average discharge voltage of the battery.

Furthermore, to increase the energy density of the battery, lithium nickel cobalt manganese oxide may be used as the positive electrode active material. For example, the positive electrode active material may be $Li(Ni, Co, Mn)O_2$.

The negative electrode active material is, for example, a material having properties of occluding and releasing metal ions (e.g., lithium ions). Examples of the negative electrode active material include a metal material, a carbon material, an oxide, a nitride, a tin compound, and a silicon compound. The metal material may be an elemental metal or an alloy. Examples of the metal material include lithium metal and a lithium alloy. Examples of the carbon material include a natural graphite, a coke, a semi-graphitized carbon, a carbon fiber, a spherical carbon, an artificial graphite, and an amorphous carbon. By using silicon (Si), tin (Sn), a silicon compound, a tin compound, or the like, the capacity density of the battery can be improved.

<Electrode Mixture Layer>

As described above, the electrode mixture layer 110 includes the halide solid electrolyte material 111. With this structure, the ionic conductivity inside the electrode mixture layer 110 increases, thereby allowing an operation at a high power.

In the case where the shape of the halide solid electrolyte material 111 included in the electrode mixture layer 110 is particulate (e.g., spherical), the median diameter of the halide solid electrolyte material 111 may be 100 $\mu$m or less. In the case where the median diameter of the halide solid electrolyte material 111 is 100 $\mu$m or less, the active material 112 and the halide solid electrolyte material 111 can be favorably dispersed in the electrode mixture layer 110. This improves the charge and discharge characteristics of the battery.

The median diameter of the halide solid electrolyte material 111 included in the electrode mixture layer 110 may be smaller than that of the active material 112. This allows the halide solid electrolyte material 111 and the active material 112 to be favorably dispersed.

The median diameter of the active material 112 may be 0.1 $\mu$m or more and 100 $\mu$m or less. In the case where the median diameter of the active material is 0.1 $\mu$m or more, the active material 112 and the halide solid electrolyte material 111 can be favorably dispersed in the electrode mixture layer 110. This improves the charge and discharge characteristics of a battery using the electrode 1000. In the case where the median diameter of the active material 112 is 100 $\mu$m or less, the diffusion rate of lithium in the active material improves. This allows a battery using the electrode 1000 to operate at a high power.

Here, the median diameter refers to a particle diameter at a cumulative volume of 50% in the volumetric particle size distribution. The volumetric particle size distribution is determined by a laser diffraction scattering method. The same applies to other materials below.

When the volume fraction of the active material 112 and the halide solid electrolyte material 111 included in the electrode mixture layer 110 is defined as "v1: 100 - v1", $30 \leq v1 \leq 95$ may be satisfied. Here, v1 represents, when the total volume of the active material 112 and the solid electrolyte material 111 included in the electrode mixture layer 110 is 100, the volume fraction of the active material 112. In the case where $30 \leq v1$ is satisfied, a sufficient energy density of the battery is easily achieved. In the case where $v1 \leq 95$ is satisfied, an operation of the battery at a high power is further easily achieved.

The thickness of the electrode mixture layer 110 may be 10 $\mu$m or more and 500 $\mu$m or less. In the case where the thickness of the electrode mixture layer 110 is 10 $\mu$m or more, a sufficient energy density of the battery is easily achieved. In the case where the thickness of the electrode mixture layer 110 is 500 $\mu$m or less, an operation of the battery at a high power is further easily achieved.

The active material 112 may be coated with a coating material to reduce the interface resistance between the active material 112 and the halide solid electrolyte material 111. As the coating material, a material having a low electronic conductivity can be used. As the coating material, an oxide material, an oxide solid electrolyte material, etc. can be used.

Examples of the oxide material which can be used as the coating material include $SiO_2$, $Al_2O_3$, $TiO_2$, $B_2O_3$, $Nb_2O_5$, $WO_3$, and $ZrO_2$.

Examples of the oxide solid electrolyte material which can be used as the coating material include a Li-Nb-O compound such as $LiNbO_3$, a Li-B-O compound such as $LiBO_2$ and $Li_3BO_3$, a Li-Al-O compound such as $LiAlO_2$, a Li-Si-O compound such as $Li_4SiO_4$, a Li-S-O compound such as $Li_2SO_4$, a Li-Ti-O compound such as $Li_4Ti_5O_{12}$, a Li-Zr-O compound such as $Li_2ZrO_3$, a Li-Mo-O compound such as $Li_2MoO_3$, a Li-V-O compound such as $LiV_2O_5$, and a Li-W-O compound such as $Li_2WO_4$. Oxide solid electrolyte materials are high in ionic conductivity and in high-potential stability. Accordingly, using an oxide solid electrolyte material as the coating material can further improve the charge and discharge efficiency of the battery.

[Electrode Current Collector Layer]

Patent Literature 1 discloses a positive electrode including: a halide solid electrolyte; an active material; and a positive electrode current collector, as well as a battery. In the battery disclosed in Patent Literature 1, an aluminum powder is used as the positive electrode current collector. In other words, the positive electrode disclosed in Patent Literature 1 includes the halide solid electrolyte, the active material, and the aluminum current collector. According to Patent Literature 1, the positive electrode disclosed therein can improve the charge and discharge efficiency of the battery owing to this structure. However, Patent Literature 1 fails to reveal the details of the influence of an electrode including a halide solid electrolyte, an active material, and a current collector on the stability of the electrode.

The present inventors have studied a battery including a halide solid electrolyte material, an active material, and a current collector. As a result, the present inventors have found that in the case where charge and discharge, that is, an oxidation-reduction reaction is repeated with the halide solid electrolyte material and copper being in contact with each other, elution, diffusion, and precipitation of copper into the halide solid electrolyte material occur. Then, the present inventors have found that this causes a problem that the ionic conductivity of the halide solid electrolyte material decreases and the reaction interface between the active material and the halide solid electrolyte material is inhibited, resulting in a decrease in cycle characteristics of the battery. This problem is considered to be caused by a reaction between the halide solid electrolyte material and copper. More specifically, a reaction at a binding site having high ion-binding properties such as M-X of halide solid electrolyte materials is considered to be the reason. Furthermore, such a phenomenon is considered to be less likely to occur at a binding site having high covalent characteristics, such as P-S bond of sulfide solid electrolyte materials and M-O bond of oxide solid electrolyte materials. In other words, such a problem above is considered to be a problem specific to halide solid electrolyte materials.

The present inventors have further studied based on the above findings. As a result, it has been found that, by setting the copper content in a surface material of an electrode current collector layer in contact with an electrode mixture layer including a halide solid electrolyte material to less than 50 mass%, a decrease in ionic conductivity of the halide solid electrolyte material can be suppressed even with a structure in which the halide solid electrolyte material is combined with a current collector. As described above, in the electrode 1000 according to Embodiment 1, in the electrode current collector layer 100, the copper content in the surface material in contact with the electrode mixture layer 110 including the halide solid electrolyte material 111 is less than 50 mass%. Accordingly, the electrode 1000 according to Embodiment 1 can suppress a decrease in ionic conductivity of the halide solid electrolyte material 111 due to the charge and discharge of the battery, and thus can improve the cycle characteristics of the battery. The copper content in the surface material may be 25 mass% or less or 10 mass% or less. Accordingly, the electrode 1000 according to Embodiment 1 can further improve the cycle characteristics of the battery.

In the electrode 1000 according to Embodiment 1, in the electrode current collector layer 100, the copper content in the surface material in contact with the electrode mixture layer 110 including the halide solid electrolyte material 111 may be 4.5 mass% or less. In the case where the copper content in the surface material is 4.5 mass% or less, the electrode 1000 according to Embodiment 1 suppresses a decrease in ionic conductivity of the halide solid electrolyte material 111 due to the charge and discharge of the battery and an inhibition of the reaction interface between the active material and the halide solid electrolyte material. Accordingly, the electrode 1000 according to Embodiment 1 can further improve the cycle characteristics of the battery.

Hereinafter, the term "surface material, of the electrode current collector layer 100, in contact with the electrode mixture layer 110" is also abbreviated as "surface material".

In the electrode 1000 according to Embodiment 1, the copper content in the surface material at least in contact with the electrode mixture layer 110, of the surface of the electrode current collector layer 100, may be 0 mass%. In other words, the surface material may contain no copper. Owing to the surface material containing no copper, a decrease in ionic conductivity of the halide solid electrolyte material 111 and an inhibition of the reaction interface between the active material and the halide solid electrolyte material can be further suppressed. Accordingly, owing to the surface material containing no copper, the electrode 1000 according to Embodiment 1 can further improve the cycle characteristics of the battery while maintaining a high ionic conductivity of the halide solid electrolyte material 111.

In the case where the surface material contains copper, the copper content in the surface material may be 0.03 mass% or more.

In the electrode 1000 according to Embodiment 1, the surface material may contain copper as long as the copper content in the surface material at least in contact with the electrode mixture layer 110, of the surface of the electrode current collector layer 100, is less than 50 mass%. In the case where the copper content is less than 50 mass%, the electrode 1000 according to Embodiment 1 can achieve both improvement in strength of the electrode current collector layer 100 and suppression of a decrease in ionic conductivity of the halide solid electrolyte material 111, and thus can further improve the cycle characteristics of the battery.

In the electrode 1000 according to Embodiment 1, the copper content in the surface material at least in contact with the electrode mixture layer 110, of the surface of the electrode current collector layer 100, may be 4.5 mass% or less. In the case where the copper content is 4.5 mass% or less, the electrode 1000 according to Embodiment 1 can better suppress a reaction between the halide solid electrolyte material 111 and copper, and thus can further improve the cycle characteristics of the battery.

Examples of the material used as the surface material according to Embodiment 1 include carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), aluminum (Al), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt). The surface material according to Embodiment 1 preferably contains at least one selected from the group consisting of carbon (C), iron (Fe), nickel (Ni), and aluminum (Al). The surface material may contain an alloy of the above metals. The surface material may contain aluminum as a main component. Here, the phrase "the surface material contains aluminum as a main component" means that the aluminum content in the surface material is 50 mass% or more. The surface material may further contain an element other than aluminum. The surface material may contain an aluminum alloy. Additionally, in the case where the surface material consists of aluminum, that is, in the case where the aluminum content in the surface material is 100 mass%, a poor strength might be exhibited. Accordingly, it is desirable that the surface material should contain an element other than aluminum. Furthermore, the aluminum content in the surface material may be 99 mass% or less or 90 mass% or less.

The surface material may contain at least one selected from the group consisting of carbon (C), silicon (Si), bismuth (Bi), antimony (Sb), lead (Pb), tin (Sn), iron (Fe), chromium (Cr), zinc (Zn), tantalum (Ta), nickel (Ni), cobalt (Co), cadmium (Cd), manganese (Mn), zirconium (Zr), titanium (Ti), beryllium (Be), thorium (Th), magnesium (Mg), sodium (Na), calcium (Ca), strontium (Sr), barium (Ba), potassium (K), rubidium (Rb), cesium (Cs), lithium (Li), vanadium (V), tungsten (W), copper (Cu), silver (Ag), gold (Au), and platinum (Pt).

In the case where the surface material contains iron, the iron content is 50 mass% or less, and may be 1.5 mass% or less. In the case where charge and discharge, that is, an oxidation-reduction reaction, is repeated with the halide solid electrolyte material and iron being in contact with each other, corrosion of iron sometimes occurs inside the halide solid electrolyte material. Then, this causes a decrease in ionic conductivity of the halide solid electrolyte material and an increase in resistance of the halide solid electrolyte material, and thus the stability of the electrode might decrease. However, in the case where the iron content is 50 mass% or less, particularly 1.5 mass% or less, a decrease in ionic conductivity of the halide solid electrolyte material can be suppressed even with a structure in which the halide solid electrolyte material is combined with a current collector. Consequently, the stability of the electrode 1000 can be improved.

To the extent that the problem above can be solved, the surface material may contain an element or a component other than the materials above in consideration of contaminations, etc. For example, on a portion of the surface of the electrode current collector layer 100, an inevitable oxide film, etc. may be formed. In other words, the surface material may contain an inevitable oxide, etc.

In the electrode 1000, the electrode current collector layer 100 only needs to be, in at least its surface in contact with the electrode mixture layer 110, formed of the surface material. In the electrode current collector layer 100, only the surface may be formed of the surface material, or the entirety of the surface and the interior may be formed of the same material as the surface material.

For example, by coating the surface of the material forming the interior of the electrode current collector layer 100 with the surface material by plating, sputtering, or the like, it is possible to produce the electrode current collector layer 100 whose surface in contact with the electrode mixture layer 110 is formed of the surface material. Furthermore, by applying a solution of the surface material or a dispersion of the surface material onto the surface of the material forming the interior of the electrode current collector layer 100 with a gravure coater, a die coater, or the like, it is possible to produce the electrode current collector layer 100 whose surface in contact with the electrode mixture layer 110 is formed of the surface material.

The thickness of the electrode current collector layer 100 may be 0.1 $\mu$m or more and 1 mm or less. In the case where the thickness of the electrode current collector layer 100 is 0.1 $\mu$m or more, the strength of the electrode current collector layer 100 improves, thereby suppressing damages to the electrode current collector layer 100. Furthermore, in the case where the thickness of the electrode current collector layer 100 is 1 mm or less, the electrical resistance of the electrode 1000 decreases, thereby facilitating an operation of the battery at a high power. In other words, an appropriate adjustment of the thickness of the electrode current collector layer 100 allows to achieve stable manufacture of the battery and to operate the battery at a high power.

A metal or a metal alloy may be used as the material of the electrode current collector layer 100 according to Embodiment 1. Examples of the metal include aluminum, iron, and copper. Examples of the metal alloy include an aluminum alloy and stainless steel (SUS).

The electrode current collector layer 100 may contain aluminum as a main component. Here, the phrase "the electrode current collector layer 100 contains aluminum as a main component" means that the aluminum content in the electrode current collector layer 100 is 50 mass% or more. Aluminum is a lightweight metal having a high electrical conductivity. Accordingly, when the electrode 1000 which includes the electrode current collector layer 100 containing aluminum as a main component is used in a battery, the electrode 1000 not only can improve the cycle characteristics of the battery but also can improve the weight energy density of the battery. The electrode current collector layer 100 containing aluminum as a main component may further contain an element other than aluminum. Additionally, in the case where the electrode current collector layer 100 consists of aluminum, that is, in the case where the aluminum content in the electrode current collector layer 100 is 100%, a poor strength might be exhibited. Accordingly, it is desirable that the electrode current collector layer 100 should contain an element other than aluminum. Furthermore, the aluminum content in the electrode current collector layer 100 may be 99 mass% or less or 90 mass% or less.

The electrode current collector layer 100 may contain an aluminum alloy. Aluminum alloys are lightweight and high in strength. Accordingly, the electrode 1000 which includes the electrode current collector layer 100 containing an aluminum alloy can achieve a battery having both a high weight energy density and a high durability. The aluminum alloy is not particularly limited. Examples thereof include an Al-Cu alloy, an Al-Mn alloy, an Al-Mn-Cu alloy, and an Al-Fe-Cu alloy.

As the material of the electrode current collector layer 100 according to Embodiment 1, an Al-Mn-Cu alloy may be used. The Al-Mn-Cu alloy has a high strength and also has excellent formability and corrosion resistance. Accordingly, the electrode 1000 which includes the electrode current collector layer 100 containing the Al-Mn-Cu alloy can further improve the cycle characteristics of the battery.

As the electrode current collector layer 100 according to Embodiment 1, the above aluminum alloy having a surface on which a carbon (C) material is provided as a surface material may be used. Examples of the carbon material include graphites such as natural graphite and artificial graphite, carbon blacks such as acetylene black and ketjen black, and conductive fibers such as a carbon fiber. By providing the carbon material on the aluminum alloy as the surface material, it is possible to seek improvement in corrosion resistance of the electrode current collector layer 100.

A method of manufacturing the electrode 1000 according to Embodiment 1 is, for example, a method in which a dispersion including the halide solid electrolyte material 111 and the active material 112, which form the electrode mixture layer 110, is coated onto the electrode current collector layer 100. As the dispersion, a slurry may be used in which the halide solid electrolyte material 111 and the active material 112 are dispersed in a solvent. As the solvent, a solvent that does not react with halide solid electrolytes, for example, an aromatic solvent such as toluene can be used. Examples of the coating method include a die coating method, a gravure coating method, a doctor blade method, a bar coating method, a spray coating method, and an electrostatic coating method.

(Embodiment 2)

Embodiment 2 will be described below. The description overlapping that in Embodiment 1 above will be omitted as appropriate.

FIG. 2 is a cross-sectional view of a battery 2000 according to Embodiment 2.

The battery 2000 according to Embodiment 2 includes a positive electrode 201, a negative electrode 203, and an electrolyte layer 202.

At least one selected from the group consisting of the positive electrode 201 and the negative electrode 203 is the electrode according to Embodiment 1 described above (e.g., the electrode 1000). In other words, at least one selected from the group consisting of the positive electrode 201 and the negative electrode 203 includes the electrode mixture layer 110 and the electrode current collector layer 100, which are described in Embodiment 1.

The electrolyte layer 202 is disposed between the positive electrode 201 and the negative electrode 203.

With the structure above, the battery 2000 of Embodiment 2 can improve the cycle characteristics.

Additionally, in the battery 2000 according to Embodiment 2, the positive electrode 201 may be the electrode 1000 according to Embodiment 1 described above.

In this case, the positive electrode 201 includes the electrode mixture layer 110 and the electrode current collector layer 100, which are described in Embodiment 1.

With the structure above, the cycle characteristics of the battery 2000 can be further improved.

The electrolyte layer 202 is a layer including an electrolyte material. The electrolyte material is, for example, a solid electrolyte material. In other words, the electrolyte layer 202 may be a solid electrolyte layer. Examples which can be used as the solid electrolyte material included in the electrolyte layer 202 include a sulfide solid electrolyte material, an oxide solid electrolyte material, a halide solid electrolyte material, a polymer solid electrolyte material, and a complex hydride solid electrolyte material. The solid electrolyte material may be, for example, a halide solid electrolyte material.

In the present disclosure, the term "oxide solid electrolyte material" refers to a solid electrolyte material containing oxygen. Here, the oxide solid electrolyte material may further contain, as an anion other than oxygen, an anion other than sulfur and halogen elements.

The "halide solid electrolyte material" is as described in Embodiment 1, and corresponds to the solid electrolyte material 111 included in the electrode mixture layer 110 according to Embodiment 1 described above.

Examples which can be used as the sulfide solid electrolyte material include $Li_2S-P_2S_5$, $Li_2S-SiS_2$, $Li_2S-B_2S_3$, $Li2S-GeS2$, $Li_{3.25}Ge_{0.25}P_{0.75}S_4$, and $Li_{10}GeP_2S_{12}$. Furthermore, $LiX$, $Li_2O$, $MO_q$, and/or $Li_pMO_q$, etc. may be added to these. Here, the element X in "LiX" is at least one selected from the group consisting of F, Cl, Br, and I. Moreover, the element M in "$MO_q$" and "$Li_pMO_q$" is at least one selected from the group consisting of P, Si, Ge, B, Al, Ga, In, Fe, and Zn. Additionally, p and q in "$MO_q$" and "$Li_pMO_q$" are each a natural number.

Examples which can be used as the oxide solid electrolyte material include: a NASICON solid electrolyte material typified by $LiTi_2(PO_4)_3$ and element-substituted substances thereof; a $(LaLi)TiO_3$-based perovskite solid electrolyte material; a LISICON-type solid electrolyte material typified by $Li_{14}ZnGe_4O_{16}$, $Li_4SiO_4$, and $LiGeO_4$ and element-substituted substances thereof; a garnet solid electrolyte material typified by $Li_7La_3Zr_2O_{12}$ and element-substituted substances thereof; $Li_3PO_4$ and N-substituted substances thereof; glass to which $Li_2SO_4$, $Li_2CO_3$, or the like has been added using a Li-B-O compound such as $LiBO_2$ or $Li_3BO_3$ as the base thereof; and glass ceramics.

Examples which can be used as the polymer solid electrolyte include a compound of a polymer compound and a lithium salt. The polymer compound may have an ethylene oxide structure. A polymer compound having an ethylene oxide structure can contain a large amount of lithium salt. This can further improve the ionic conductivity. Examples which can be used as the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. The lithium salts may be used alone, or two or more thereof may be used in combination.

Examples which can be used as the complex hydride solid electrolyte include $LiBH_4$-LiI and $LiBH_4$-$P_2S_5$.

Additionally, the electrolyte layer 202 may include the solid electrolyte material as a main component. In other words, the electrolyte layer 202 may include, the solid electrolyte material, for example, at a mass proportion of 70% or more (70 mass% or more) with respect to the entire electrolyte layer 202.

With the structure above, the charge and discharge characteristics of the battery 2000 can be further improved.

Additionally, while including the solid electrolyte material as a main component, the electrolyte layer 202 may further include inevitable impurities, or a starting material used for synthesis of the solid electrolyte material, a by-product, a decomposition product, etc.

Furthermore, the electrolyte layer 202 may include the solid electrolyte material, for example, at a mass proportion of 100% (100 mass%) with respect to the entire electrolyte layer 202, except for inevitably incorporated impurities.

With the structure above, the charge and discharge characteristics of the battery 2000 can be further improved.

Additionally, the electrolyte layer 202 may include two or more of the materials listed as the solid electrolyte material. For example, the electrolyte layer 202 may include a halide solid electrolyte material and a sulfide solid electrolyte material.

The thickness of the electrolyte layer 202 may be 1 $\mu$m or more and 300 $\mu$m or less. In the case where the thickness of the electrolyte layer 202 is 1 $\mu$m or more, a possibility of a short-circuit between the positive electrode 201 and the negative electrode 203 is reduced. Furthermore, in the case where the thickness of the electrolyte layer 202 is 300 $\mu$m or less, an operation at a high power is easily achieved. In other words, an appropriate adjustment of the thickness of the electrolyte layer 202 allows to achieve a sufficient safety of the battery 2000 and to operate the battery 2000 at a high power.

The shape of the solid electrolyte material included in the battery 2000 is not limited. The shape of the solid electrolyte material may be, for example, acicular, spherical, or ellipsoidal. The shape of the solid electrolyte material may be, for example, particulate.

At least one of the positive electrode 201 and the negative electrode 203 may include an electrolyte material, and may include, for example, a solid electrolyte material. As the solid electrolyte material, a solid electrolyte material exemplified as a material forming the electrolyte layer 202 can be used. With the structure above, the ionic conductivity (e.g., lithium ionic conductivity) inside the positive electrode 201 or the negative electrode 203 increases, thereby allowing an operation at a high power.

Furthermore, the positive electrode 201 or the negative electrode 203 may include a sulfide solid electrolyte material as the solid electrolyte material and use the halide solid electrolyte material described above as a coating material coating the active material.

The positive electrode 201 includes, for example, as a positive electrode active material, a material having properties of occluding and releasing metal ions (e.g., lithium ions). As the positive electrode active material, the materials exemplified in Embodiment 1 described above may be used.

In the case where the shape of the solid electrolyte material included in the positive electrode 201 is particulate (e.g., spherical), the median diameter of the solid electrolyte material may be 100 $\mu$m or less. In the case where the median diameter of the solid electrolyte material is 100 $\mu$m or less, the positive electrode active material and the solid electrolyte material can be favorably dispersed in the positive electrode 201. This improves the charge and discharge characteristics of the battery 2000.

The median diameter of the solid electrolyte material included in the positive electrode 201 may be smaller than that of the positive electrode active material. This allows the solid electrolyte material and the positive electrode active material to be favorably dispersed.

The median diameter of the positive electrode active material may be 0.1 $\mu$m or more and 100 $\mu$m or less. In the case where the median diameter of the positive electrode active material is 0.1 $\mu$m or more, the positive electrode active material and the solid electrolyte material can be favorably dispersed in the positive electrode 201. This improves the charge and discharge characteristics of the battery 2000. In the case where the median diameter of the positive electrode active material is 100 $\mu$m or less, the diffusion rate of lithium in the positive electrode active material improves. This allows the battery 2000 to operate at a high power.

When the volume fractions of the positive electrode active material and the solid electrolyte material included in the positive electrode 201 are defined as "v2: 100 - v2", $30 \leq v2 \leq 95$ may be satisfied. Here, v2 represents, when the total volume of the positive electrode active material and the solid electrolyte material included in the positive electrode 201 is 100, the volume fraction of the positive electrode active material. In the case where $30 \leq v2$ is satisfied, a sufficient energy density of the battery 2000 is easily achieved. In the case where $v2 \leq 95$ is satisfied, an operation of the battery 2000 at a high power is further easily achieved.

The thickness of the positive electrode 201 may be 10 $\mu$m or more and 500 $\mu$m or less. In the case where the thickness of the positive electrode 201 is 10 $\mu$m or more, a sufficient energy density of the battery 2000 is easily achieved. In the case where the thickness of the positive electrode 201 is 500 $\mu$m or less, an operation of the battery 2000 at a high power is further easily achieved.

The negative electrode 203 includes, for example, as a negative electrode active material, a material having properties of occluding and releasing metal ions (e.g., lithium ions). As the negative electrode active material, the materials exemplified in Embodiment 1 described above may be used.

The median diameter of the negative electrode active material may be 0.1 $\mu$m or more and 100 $\mu$m or less. In the case where the median diameter of the negative electrode active material is 0.1 $\mu$m or more, the negative electrode active material and the solid electrolyte material can be favorably dispersed in the negative electrode 203. This improves the charge and discharge characteristics of the battery 2000. In the case where the median diameter of the negative electrode active material is 100 $\mu$m or less, the diffusion rate of lithium in the negative electrode active material improves. This allows the battery 2000 to operate at a high power.

The median diameter of the negative electrode active material may be larger than that of the solid electrolyte material. This allows the solid electrolyte material and the negative electrode active material to be favorably dispersed.

When the volume fractions of the negative electrode active material and the solid electrolyte material included in the negative electrode 203 are defined as "v3: 100 - v3", $30 \leq v3 \leq 95$ may be satisfied. Here, v3 represents, when the total volume of the negative electrode active material and the solid electrolyte material included in the negative electrode 203 is 100, the volume fraction of the negative electrode active material. In the case where $30 \leq v3$ is satisfied, a sufficient energy density of the battery 2000 is easily achieved. In the case where $v3 \leq 95$ is satisfied, an operation of the battery 2000 at a high power is further easily achieved.

The thickness of the negative electrode 203 may be 10 $\mu$m or more and 500 $\mu$m or less. In the case where the thickness of the negative electrode 203 is 10 $\mu$m or more, a sufficient energy density of the battery 2000 is easily achieved. In the case where the thickness of the negative electrode 203 is 500 $\mu$m or less, an operation of the battery 2000 at a high power is further easily achieved.

The positive electrode active material and the negative electrode active material each may be coated with a coating material to reduce the interface resistance between each of the active materials and the solid electrolyte material. As the coating material, a material having a low electronic conductivity can be used. As the coating material, an oxide material, an oxide solid electrolyte material, etc. can be used. As the coating material, the materials exemplified in Embodiment 1 described above may be used.

At least one selected from the group consisting of the positive electrode 201, the electrolyte layer 202, and the negative electrode 203 may contain a binder to improve the adhesion between the particles. Examples of the binder include polyvinylidene fluoride, polytetrafluoroethylene, polyethylene, polypropylene, aramid resin, polyamide, polyimide, polyamide-imide, polyacrylonitrile, polyacrylic acid, polyacrylic acid methyl ester, polyacrylic acid ethyl ester, polyacrylic acid hexyl ester, polymethacrylic acid, polymethacrylic acid methyl ester, polymethacrylic acid ethyl ester, polymethacrylic acid hexyl ester, polyvinyl acetate, polyvinylpyrrolidone, polyether, polycarbonate, polyethersulfone, polyetherketone, polyetheretherketone, polyphenylenesulfide, hexafluoropolypropylene, styrene-butadiene rubber, carboxymethylcellulose, and ethylcellulose. Furthermore, copolymers can be used which include, as monomers, two or more selected from the group consisting of tetrafluoroethylene, hexafluoroethylene, hexafluoropropylene, perfluoroalkyl vinyl ether, vinylidene fluoride, chlorotrifluoroethylene, ethylene, propylene, butadiene, styrene, pentafluoropropylene, fluoromethyl vinyl ether, acrylic acid ester, acrylic acid, and hexadiene. These may be used alone, or two or more thereof may be used in combination.

As the binder, an elastomer may be used because of being excellent in binding properties. Note that elastomers are polymers having elasticity. Furthermore, an elastomer used as the binder may be a thermoplastic elastomer or a thermosetting elastomer. The binder may include a thermoplastic elastomer. Examples of the thermoplastic elastomer include styrene-ethylene-butylene-styrene (SEBS), styrene-ethylene-propylene-styrene (SEPS), styrene-ethylene-ethylene-propylene-styrene (SEEPS), butylene rubber (BR), isoprene rubber (IR), chloroprene rubber (CR), acrylonitrile-butadiene rubber (NBR), styrene-butylene rubber (SBR), styrene-butadienestyrene (SBS), styrene-isoprene-styrene (SIS), hydrogenated isoprene rubber (HIR), hydrogenated butyl rubber (HIIR), hydrogenated nitrile rubber (HNBR), hydrogenated styrene-butylene rubber (HSBR), polyvinylidene fluoride (PVdF), and polytetrafluoroethylene (PTFE). Furthermore, two or more selected from these may be mixed and used. In the case where the binder includes a thermoplastic elastomer, high filling of the electrode 1000 can be achieved in thermocompression during battery manufacture.

To facilitate transfer of lithium ions and thereby improve the output characteristics of the battery 2000, at least one selected from the group consisting of the positive electrode 201, the electrolyte layer 202, and the negative electrode 203 may contain a nonaqueous electrolyte solution, a gel electrolyte, or an ionic liquid.

The nonaqueous electrolyte solution contains a nonaqueous solvent and a lithium salt dissolved in the nonaqueous solvent. Examples of the nonaqueous solvent which can be used include a cyclic carbonate solvent, a linear carbonate solvent, a cyclic ether solvent, a linear ether solvent, a cyclic ester solvent, a linear ester solvent, and a fluorinated solvent. Examples of the cyclic carbonate solvent include ethylene carbonate, propylene carbonate, and butylene carbonate. Examples of the linear carbonate solvent include dimethyl carbonate, ethyl methyl carbonate, and diethyl carbonate. Examples of the cyclic ether solvent include tetrahydrofuran, 1,4-dioxane, and 1,3-dioxolane. Examples of the linear ether solvent include 1,2-dimethoxyethane and 1,2-diethoxyethane. Examples of the cyclic ester solvent include γ-butyrolactone. Examples of the linear ester solvent include methyl acetate. Examples of the fluorinated solvent include fluoroethylene carbonate, methyl fluoropropionate, fluorobenzene, fluoroethyl methyl carbonate, and fluorodimethylene carbonate. As the nonaqueous solvent, one nonaqueous solvent selected from these may be used alone, or a mixture of two or more nonaqueous solvents selected from these may be used.

The nonaqueous electrolyte solution may contain at least one fluorinated solvent selected from the group consisting of fluoroethylene carbonate, methyl fluoropropionate, fluorobenzene, fluoroethyl methyl carbonate, and fluorodimethylene carbonate.

Examples of the lithium salt include $LiPF_6$, $LiBF_4$, $LiSbF_6$, $LiAsF_6$, $LiSO_3CF_3$, $LiN(SO_2F)_2$, $LiN(SO_2CF_3)_2$, $LiN(SO_2C_2F_5)_2$, $LiN(SO_2CF_3)(SO_2C_4F_9)$, and $LiC(SO_2CF_3)_3$. As the lithium salt, one lithium salt selected from these may be used alone, or a mixture of two or more lithium salts selected from these may be used. The concentration of the lithium salt may be, for example, 0.5 mol/L or more and 2 mol/L or less.

As the gel electrolyte, a material obtained by impregnating a polymer material with a nonaqueous electrolyte solution can be used. Examples of the polymer material include polyethylene oxide, polyacrylonitrile, polyvinylidene fluoride, polymethyl methacrylate, and a polymer having an ethylene oxide bond.

Cations constituting the ionic liquid may be: aliphatic linear quaternary salts such as tetraalkylammoniums and tetraalkylphosphoniums; aliphatic cyclic ammoniums such as pyrrolidiniums, morpholiniums, imidazoliniums, tetrahydropyrimidiniums, piperaziniums, and piperidiniums; nitrogen-containing heterocyclic aromatic cations such as pyridiniums and imidazoliums, or the like. Anions constituting the ionic liquid may be $PF_6^-$, $BF_4^-$, $SbF_6^-$, $AsF_6^-$, $SO_3CF_3^-$, $N(SO_2F)_2^-$, $N(SO_2CF_3)_2^-$, $N(SO_2C_2F_5)_2^-$, $N(SO_2CF_3)(SO_2C_4F_9)^-$, $C(SO_2CF_3)_3^-$, or the like. The ionic liquid may contain a lithium salt.

At least one of the positive electrode 201 and the negative electrode 203 may contain a conductive additive to improve the electronic conductivity. Examples of the conductive additive include: graphites such as natural graphite and artificial graphite; carbon blacks such as acetylene black and ketjen black; conductive fibers such as a carbon fiber and a metal fiber; conductive powders such as a fluorinated carbon powder and an aluminum powder; conductive whiskers such as a zinc oxide whisker and a potassium titanate whisker; conductive metal oxides such as titanium oxide; and conductive polymers such as polyaniline, polypyrrole, and polythiophene. Using a carbon material as the conductive additive can seek cost reduction.

The shape of the battery is, for example, a coin type, a cylindrical type, a prismatic type, a sheet type, a button type, a flat type, or a stack type.

The battery 2000 according to Embodiment 2 may be manufactured, for example, by preparing each of a current collector material for a positive electrode, a material for forming a positive electrode, a material for forming an electrolyte layer, a material for forming a negative electrode, and a current collector material for a negative electrode, and producing by a known method a stack in which the positive electrode, the electrolyte layer, and the negative electrode are disposed in this order.

Examples

Hereinafter, the details of the present disclosure will be described with reference to examples and a comparative example. Note that the electrode and the battery of the present disclosure are not limited to the following examples.

<Example 1>

[Production of Halide Solid Electrolyte Material]

In an argon glove box with a dew point of -60°C or less, $YCl_3$, LiCl, and LiBr were weighed as raw material powders at a molar ratio of $YCl_3$: LiCl: LiBr = 1: 1: 2. Then, these raw material powders were mixed, and the resulting mixture was subjected to a firing process at 520°C for 2 hours using an electric furnace. Thus, $Li_3YBr_2Cl_4$ (hereinafter referred to as "LYBC"), which is a halide solid electrolyte material, was obtained. P-chlorotoluene was added to the obtained LYBC, and the resulting mixture was pulverized using a wet pulverizing and dispersing device, and then dried. Thus, a LYBC fine powder (having a median diameter Dso = 0.4 μm) was obtained.

[Production of Sulfide Solid Electrolyte Material]

In an argon glove box with a dew point of -60°C or less, $Li_2S$ and $P_2S_5$ were weighed as raw material powders at a molar ratio of $Li_2S$: $P_2S_5$ = 75: 25. These raw material powders were pulverized for mixing in a mortar. The resulting mixture was then subjected to a milling process at 510 rpm for 10 hours using a planetary ball mill (Type P-7, manufactured by Fritsch GmbH). The resulting glassy solid electrolyte was heat-treated at 270°C in an inert atmosphere for 2 hours. In this way, $Li_2S$-$P_2S_5$ (hereinafter referred to as "LPS"), which is a solid electrolyte material in the form of glass ceramics, was obtained.

[Production of Positive Electrode]

In an argon glove box with a dew point of -60°C or less, a LYBC fine powder and a positive electrode active material (Li(Ni, Co, Mn)O$_2$) were weighed at a mass ratio of LYBC: Li(Ni, Co, Mn)O$_2$ = 18.45: 81.55. The mixture was mixed in an agate mortar to produce an electrode mixture. Subsequently, the electrode mixture and SEBS (Tuftec N504 manufactured by Asahi Kasei Corporation) were weighed at a mass ratio of the electrode mixture: SEBS = 100: 0.4. The weighed electrode mixture and SEBS were dissolved or dispersed in a solvent p-chlorotoluene, and then were kneaded at 1600 rpm for 6 minutes using a planetary centrifugal mixer (ARE-310 manufactured by THINKY CORPORATION). Thus an electrode mixture slurry was produced. An aluminum alloy foil A1085 (copper content: 0.03 mass%, thickness: 15 $\mu$m) was used as an electrode current collector layer. Onto this metal foil, the electrode mixture slurry was coated and dried at 100°C in a vacuum for 1 hour to produce a positive electrode. In this positive electrode, a halide solid electrolyte material was formed of LYBC, the active material was formed of Li(Ni, Co, Mn)O$_2$, and the electrode current collector layer was formed of aluminum alloy A1085.

[Production of Negative Electrode Mixture]

In an argon glove box with a dew point of -60°C or less, LPS and a negative electrode active material (graphite) were weighed at a mass ratio of LPS: graphite = 60: 40. These were mixed in an agate mortar to produce a negative electrode mixture.

[Production of Batteries]

In an insulating outer cylinder, the positive electrode punched out to have $\varphi$ 9.2 mm, 20 mg of LYBC, 60 mg of LPS, and the negative electrode mixture were stacked in this order. The resulting stack was pressure-molded at a pressure of 740 MPa to obtain a battery composed of a positive electrode, a solid electrolyte layer, and a negative electrode. In the obtained battery, the thickness of a positive electrode mixture layer was approximately 60 $\mu$m and the thickness of the positive electrode was approximately 75 $\mu$m.

Next, stainless steel pins were placed on the top and the bottom of the battery. Current collector leads were attached to the stainless steel pins.

Next, the inside of the insulating outer cylinder was blocked for sealing from the outside atmosphere with an insulating ferrule.

Finally, the battery was held from above and below with four bolts to apply a surface pressure of 150 MPa to the battery.

In this way, the battery of Example 1 was produced. In the battery of Example 1, the positive electrode was the electrode of the present disclosure. In the electrode included in the battery of Example 1, the copper content in a surface material of the electrode current collector layer in contact with the electrode mixture layer was 0.03 mass%.

<Example 2>

In positive electrode production, an aluminum alloy foil A2017 (copper content: 3.5 mass% or more and 4.5 mass% or less, thickness: 10 $\mu$m) was used as an electrode current collector layer. The processes except for this were performed in a similar manner to the method of Example 1 described above to obtain a battery of Example 2.

In an electrode included in the battery of Example 2, the copper content in a surface material of the electrode current collector layer in contact with the positive electrode mixture layer was 3.5 mass% or more and 4.5 mass% or less. Note that the "electrode included in the battery of Example 2" refers to a positive electrode.

<Example 3>

In positive electrode production, an aluminum alloy foil A3003 (copper content: 0.05 mass% or more and 0.20 mass% or less, thickness: 15 $\mu$m) was used as an electrode current collector layer. The processes except for this were performed in a similar manner to the method of Example 1 described above to obtain a battery of Example 3. In an electrode included in the battery of Example 3, the copper content in a surface material of the electrode current collector layer in contact with the electrode mixture layer was 0.05 mass% or more and 0.20 mass% or less. Note that the "electrode included in the battery of Example 3" refers to a positive electrode.

<Example 4>

In positive electrode production, an aluminum alloy foil A8021 (copper content: 0.05 mass%, thickness: 15 μm) was used as an electrode current collector layer. The processes except for this were performed in a similar manner to the method of Example 1 described above to obtain a battery of Example 4. In an electrode included in the battery of Example 4, the copper content in a surface material of the electrode current collector layer in contact with the electrode mixture layer was 0.05 mass%. Note that the "electrode included in the battery of Example 4" refers to a positive electrode.

<Example 5>

In positive electrode production, a stainless steel foil SUS304 (copper content: 0 mass%, thickness: 10 μm) was used as an electrode current collector layer. The processes except for this were performed in a similar manner to the method of Example 1 described above to obtain a battery of Example 5. In an electrode included in the battery of Example 5, the copper content in a surface material of the electrode current collector layer in contact with the electrode mixture layer was 0 mass%. Note that the "electrode included in the battery of Example 5" refers to a positive electrode.

<Comparative Example 1>

In positive electrode production, a rolled copper foil (copper content: more than 99 mass%, thickness: 12 μm) was used as an electrode current collector layer. The processes except for this were performed in a similar manner to the method of Example 1 described above to obtain a battery of Comparative Example 1. In an electrode included in the battery of Comparative Example 1, the copper content in a surface material of the electrode current collector layer in contact with the electrode mixture layer was more than 99 mass%.

<Evaluation of Batteries>

[Charge and Discharge Test]

A charge and discharge test was performed under the following conditions using each of the batteries of Examples 1 to 5 and Comparative Example 1 described above.

The battery was placed in a thermostatic chamber at 25°C.

The battery was charged at a current density of a current value at a 0.05 C rate (20-hour rate) with respect to the theoretical capacity of the positive electrode active material (Li(Ni, Co, Mn)O$_2$) until the voltage reached 4.2 V. Next, the battery was discharged at a current density of a current value, which was also at a 0.05 C rate, until the voltage reached 2.5 V.
The charge and discharge above were repeated for 10 cycles.
In this way, the discharge capacity retention rate at the tenth cycle (= the discharge capacity at the tenth cycle/the initial discharge capacity) was determined for each of the batteries of Examples 1 to 5 and Comparative Example 1 described above. The results are shown in Table 1.

[Table 1]

|  |  | Material type of electrode current collector layer | Copper content in surface material of electrode current collector layer [mass%] | Discharge capacity retention rate at tenth cycle [%] |
| --- | --- | --- | --- | --- |
|  | Example 1 | Aluminum alloy A1085 | 0.03 | 94.7 |
|  | Example 2 | Aluminum alloy A2017 | 3.5 to 4.5 | 94.3 |
|  | Example 3 | Aluminum alloy A3003 | 0.05 to 0.20 | 96.0 |
|  | Example 4 | Aluminum alloy A8021 | 0.05 | 94.9 |
|  | Example 5 | Stainless steel SUS304 | 0 | 95.0 |
|  | Comparative Example 1 | Rolled copper | > 99 | 84.7 |

[X-ray Photoelectron Spectroscopy]

In the battery of Comparative Example 1 after the charge and discharge test described above, the electrode current collector layer was peeled off. Elemental analysis was performed by X-ray photoelectron spectroscopy (XPS) on the surface of the positive electrode mixture layer in contact with the electrode current collector layer and its depth direction. The results are shown in Table 2.

[Table 2]

| Atomic concentration (at.%) | | | | | |
| --- | --- | --- | --- | --- | --- |
| Depth (nm) | Cu | Ni | Y | Br | Cl |
| 0 | 5 | 2 | 4 | 12 | 19 |
| 1 | 10 | 5 | 7 | 14 | 25 |
| 3 | 9 | 6 | 9 | 16 | 29 |
| 5 | 10 | 10 | 9 | 16 | 27 |
| 10 | 8 | 11 | 11 | 15 | 25 |
| 20 | 8 | 15 | 11 | 14 | 23 |
| 30 | 6 | 16 | 13 | 14 | 21 |
| 50 | 2 | 22 | 12 | 13 | 19 |
| 70 | 2 | 22 | 12 | 12 | 15 |
| 100 | 1 | 28 | 11 | 11 | 13 |

<Discussion>

From the comparison of the results of Examples 1 to 5 and the results of Comparative Example 1 shown in Table 1, it was ascertained that the batteries, which used the electrode in which the copper content in the surface material of the electrode current collector layer in contact with the electrode mixture layer was less than 50 mass%, exhibit a high discharge capacity retention rate at the tenth cycle and thus exhibit improved cycle characteristics of the battery.
Furthermore, according to the surface analysis and the depth analysis by XPS on the positive electrode mixture layer of Comparative Example 1 shown in Table 2, copper (Cu) contained in the electrode current collector layer was detected. From the results, it could be assumed that in the case where charge and discharge, that is, an oxidation-reduction reaction was repeated, elution, diffusion, and precipitation of copper into the halide solid electrolyte material occurred.
From the above, it was ascertained that using the electrode of the present disclosure improves the cycle characteristics of the battery. The electrode of the present disclosure is an electrode including:

an electrode mixture layer; and
an electrode current collector layer, wherein
the electrode current collector layer is in contact with the electrode mixture layer,
the electrode mixture layer includes a solid electrolyte material and an active material,
the solid electrolyte material includes Li, M, and X,
the M is at least one selected from the group consisting of metal elements other than Li and metalloid elements,
the X is at least one selected from the group consisting of F, Cl, Br, and I, and
the electrode current collector layer has a surface material in contact with the electrode mixture layer, and a copper content in the surface material is less than 50 mass%.

INDUSTRIAL APPLICABILITY

The battery of the present disclosure can be utilized as, for example, an all-solid-state lithium ion secondary battery.

**Claims**

1. An electrode comprising:

    an electrode mixture layer; and
    an electrode current collector layer, wherein
    the electrode current collector layer is in contact with the electrode mixture layer,
    the electrode mixture layer includes a solid electrolyte material and an active material,
    the solid electrolyte material includes Li, M, and X,
    the M is at least one selected from the group consisting of metal elements other than Li and metalloid elements,
    the X is at least one selected from the group consisting of F, Cl, Br, and I, and
    the electrode current collector layer has a surface material in contact with the electrode mixture layer, and a copper content in the surface material is less than 50 mass%.

2. The electrode according to claim 1, wherein
    the copper content in the surface material is 4.5 mass% or less.

3. The electrode according to claim 1 or 2, wherein

    the solid electrolyte material is represented by the following composition formula (1)

    $$Li_\alpha M_\beta X_\gamma ... \qquad \text{Formula (1)},$$

    where $\alpha$, $\beta$, and $\gamma$ are each a value greater than 0.

4. The electrode according to any one of claims 1 to 3, wherein
    the M includes yttrium.

5. The electrode according to any one of claims 1 to 4, wherein
    the electrode current collector layer includes aluminum as a main component.

6. The electrode according to claim 5, wherein
    the electrode current collector layer further includes an element other than aluminum.

7. The electrode according to any one of claims 1 to 6, wherein
    the electrode current collector layer includes an aluminum alloy.

8. The electrode according to any one of claims 1 to 7, wherein
    the active material is a lithium-containing transition metal oxide.

9. The electrode according to claim 8, wherein
    the active material is lithium nickel cobalt manganese oxide.

10. A battery comprising:

    a positive electrode;
    a negative electrode; and
    an electrolyte layer disposed between the positive electrode and the negative electrode, wherein
    at least one selected from the group consisting of the positive electrode and the negative electrode is the electrode according to one of claims 1 to 9.

11. The battery according to claim 10, wherein
    the positive electrode is the electrode according to one of claims 1 to 9.

FIG. 1

FIG. 2

## INTERNATIONAL SEARCH REPORT

| International application No. |
|---|
| PCT/JP2020/048306 |

**A. CLASSIFICATION OF SUBJECT MATTER**
H01M 4/13(2010.01)i; H01M 4/131(2010.01)i; H01M 4/505(2010.01)i; H01M 4/525(2010.01)i; H01M 4/62(2006.01)i; H01M 4/66(2006.01)i
FI: H01M4/13; H01M4/62 Z; H01M4/66 A; H01M4/131; H01M4/525; H01M4/505
According to International Patent Classification (IPC) or to both national classification and IPC

**B. FIELDS SEARCHED**

Minimum documentation searched (classification system followed by classification symbols)
H01M4/13; H01M4/131; H01M4/505; H01M4/525; H01M4/62; H01M4/66

Documentation searched other than minimum documentation to the extent that such documents are included in the fields searched
Published examined utility model applications of Japan     1922-1996
Published unexamined utility model applications of Japan   1971-2021
Registered utility model specifications of Japan           1996-2021
Published registered utility model applications of Japan   1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2019/135346 A1 (PANASONIC IP MANAGEMENT CO., LTD.) 11 July 2019 (2019-07-11) paragraphs [0130]–[0138], [0203]–[0207], [0228] | 1-6, 8-11<br>7 |
| X<br>Y | WO 2019/146217 A1 (PANASONIC IP MANAGEMENT CO., LTD.) 01 August 2019 (2019-08-01) paragraphs [0151]–[0160] | 1-6, 8-11<br>7 |
| Y | WO 2017/065145 A1 (CENTRAL GLASS CO., LTD.) 20 April 2017 (2017-04-20) paragraph [0015] | 7 |

☐ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09 March 2021 (09.03.2021) | 23 March 2021 (23.03.2021) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2020/048306

| Patent Documents referred in the Report | Publication Date | Patent Family | Publication Date |
|---|---|---|---|
| WO 2019/135346 A1 | 11 Jul. 2019 | US 2020/0328464 A1 paragraphs [0132]-[0140], [0205]-[0209], [0229] EP 3736891 A1 CN 111295789 A | |
| WO 2019/146217 A1 | 01 Aug. 2019 | US 2020/0350624 A1 paragraphs [0190]-[0203] EP 3745522 A1 CN 111587508 A | |
| WO 2017/065145 A1 | 20 Apr. 2017 | US 2019/0006713 A1 paragraph [0018] EP 3425718 A1 CN 108140891 A KR 10-2018-0064523 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2019146217 A